(19) **Europäisches Patentamt / European Patent Office / Office européen des brevets**

(11) **EP 3 889 190 A1**

(12) **EUROPEAN PATENT APPLICATION**
published in accordance with Art. 153(4) EPC

(43) Date of publication:
06.10.2021 Bulletin 2021/40

(21) Application number: 19891119.0

(22) Date of filing: 26.11.2019

(51) Int Cl.:
C08F 20/10 (2006.01)          C08F 265/06 (2006.01)
C08L 33/04 (2006.01)          C08L 51/00 (2006.01)
C08J 5/18 (2006.01)           G02B 5/30 (2006.01)

(86) International application number:
PCT/JP2019/046250

(87) International publication number:
WO 2020/111082 (04.06.2020 Gazette 2020/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.11.2018 JP 2018225724

(71) Applicant: Kuraray Co., Ltd.
Kurashiki-shi, Okayama 710-0801 (JP)

(72) Inventors:
• SUGII, Hiroaki
  Tainai-shi, Niigata 959-2691 (JP)
• HIGASHIDA, Noboru
  Tainai-shi, Niigata 959-2691 (JP)
• TAKEDA, Hideaki
  Tainai-shi, Niigata 959-2691 (JP)

(74) Representative: Müller-Boré & Partner
Patentanwälte PartG mbB
Friedenheimer Brücke 21
80639 München (DE)

(54) **(METH)ACRYLIC RESIN COMPOSITION AND (METH)ACRYLIC RESIN FILM**

(57) The present invention relates to a (meth)acrylic resin composition, containing a (meth)acrylic resin (A) and (meth)acrylic crosslinked rubber particles (B), wherein the (meth)acrylic resin composition has a complex viscosity of 500 to 1300 Pa·s under measurement conditions of 265°C, 10 rad/sec, and 1% strain.

**EP 3 889 190 A1**

**Description**

Technical Field

The present invention relates to a (meth)acrylic resin composition and a (meth)acrylic resin film.

Background Art

Films and sheets using a (meth)acrylic resin composition are excellent in transparency and weather resistance, and thus are used in applications such as optical products, decorative products, vehicle products, electric devices, and signboards.

For example, a polarizing plate in a liquid crystal display or an organic EL display and a polarizer protective film used for the polarizing plate have been used under severe environmental conditions such as outdoors or in an automobile due to expansion to automobiles and wearable applications. In addition, for the purpose of improving handleability in a polarizing plate production process, a (meth)acrylic resin film in which (meth)acrylic elastic body particles are contained in a (meth)acrylic resin has been studied in order to obtain higher toughness (see PTLs 1 and 2).

Citation List

Patent Literature

[PTL 1] WO 2017/204243
[PTL 2] JP 2010-231015 A

Summary of Invention

Technical Problem

Films and sheets used in optical applications, decorative applications, and the like are desired to reduce appearance defects and the like called fish eyes. As a method for preventing such defects, there is a method of using a filtration device called a polymer filter during film formation.

However, the thermoplastic resin composition described in PTL 1 has a high melt viscosity (particularly complex viscosity) in a low shear rate region, and the initial differential pressure and the rate of increase of the differential pressure in the polymer filter are large. Therefore, the time required to reach the resin pressure resistance value of the filter element is short, and when the value is exceeded, the opening of the filtration portion is enlarged by the resin pressure, which becomes a factor of reducing the appearance quality of the film due to the inclusion of foreign matter, and there is a problem that long-term continuous productivity cannot be ensured. In addition, the raw material of the polarizer protective film described in PTL 2 has no regulation regarding the melt viscosity (particularly complex viscosity), and may cause the above-described problem.

The present invention has been made in view of such circumstances, and an object thereof is to provide a (meth)acrylic resin composition from which a (meth)acrylic resin film having low viscosity, suitable for long-term film productivity, and high tensile elongation at break can be obtained, and a (meth)acrylic resin film containing the (meth)acrylic resin composition.

Solution to Problem

As a result of intensive studies to solve the above-described problems, the present inventors have found that long-term continuous productivity can be ensured and the toughness of a film can be improved by setting the complex viscosity (melt viscosity) of a (meth)acrylic resin composition in a low shear rate region within a specific range, and have completed the present invention.

That is, the present invention provides the following [1] to [12].

[1] A (meth)acrylic resin composition, containing a (meth)acrylic resin (A) and (meth)acrylic crosslinked rubber particles (B), wherein the (meth)acrylic resin composition has a complex viscosity of 500 to 1300 Pa ·s under measurement conditions of 265°C, 10 rad/sec, and 1% strain.

[2] The (meth)acrylic resin composition as set forth in [1], wherein the content of the (meth)acrylic crosslinked rubber particles (B) in the (meth)acrylic resin composition is 5 to 40% by mass.

[3] The (meth)acrylic resin composition as set forth in [1] or [2], wherein the (meth)acrylic resin (A) contains 15 to 98 parts by mass of a (meth)acrylic resin (A-1) having a melt flow rate of more than 5 g/10 min and less than 20 g/10 min under conditions of a temperature of 230°C and a load of 3.8 kg, 2 to 15 parts by mass of a (meth)acrylic resin (A-2) having a melt flow rate of 20 g/10 min or more under conditions of a temperature of 230°C and a load of 3.8 kg, and 0 to 83 parts by mass of a (meth)acrylic resin (A-3) having a melt flow rate of 5 g/10 min or less under conditions of a temperature of 230°C and a load of 3.8 kg, with respect to 100 parts by mass of the (meth)acrylic resin (A).

[4] The (meth)acrylic resin composition as set forth in [3], wherein the (meth)acrylic resin (A-1) contains 85 to 97% by mass of a structural unit derived from methyl methacrylate and has a weight average molecular weight of 66000 to 92000.

[5] The (meth)acrylic resin composition as set forth in [3] or [4], wherein the (meth)acrylic resin (A-2) contains 80 to 97% by mass of a structural unit derived from methyl methacrylate and has a weight average molecular weight of 40000 to 65000.

[6] The (meth)acrylic resin composition as set forth in any of [3] to [5], wherein the (meth)acrylic resin (A-3) contains 95% by mass or more of a structural unit derived from methyl methacrylate and has a weight average molecular weight of 93000 to 150000.

[7] The (meth)acrylic resin composition as set forth in any of [1] to [6], wherein the (meth)acrylic crosslinked rubber particles (B) contain 20 to 60% by mass of a structural unit derived from an alkyl acrylate ester.

[8] A (meth)acrylic resin film containing the (meth)acrylic resin composition as set forth in any of [1] to [7] and having a thickness of 20 to 500 $\mu$m.

[9] The (meth)acrylic resin film as set forth in [8], which has a tensile elongation at break in the MD direction, as measured in conformity with JIS K 7127:1999, of 7% or more.

[10] A decorative film containing the (meth)acrylic resin film as set forth in [8] or [9].

[11] An optical film containing the (meth)acrylic resin film as set forth in [8] or [9].

[12] The optical film as set forth in [11], which is a polarizer protective film.

Advantageous Effects of Invention

According to the present invention, it is possible to provide a (meth)acrylic resin composition capable of obtaining a (meth)acrylic resin film having a low viscosity, suitable for long-term film productivity, and having a high tensile elongation at break, and a (meth)acrylic resin film containing the (meth)acrylic resin composition.

Description of Embodiments

Hereinafter, an example of an embodiment to which the present invention is applied will be described. The numerical values specified in the description herein are values obtained by the method disclosed in the embodiments or examples. It should be noted that other embodiments are also included in the scope of the present invention as long as they meet the purpose of the present invention. In the description herein, "(meth)acrylic" means "acrylic or methacrylic", and "(meth)acrylic acid ester" means "acrylic acid ester or methacrylic acid ester". The resin film made of the (meth)acrylic resin composition may be referred to as a "(meth)acrylic resin film".

[(Meth)acrylic Resin Composition]

The (meth)acrylic resin composition of the present invention contains a (meth)acrylic resin (A) and (meth)acrylic crosslinked rubber particles (B), and is characterized by having a complex viscosity of 500 to 1300 Pa·s under measurement conditions of 265°C, 10 rad/sec, and 1% strain.

<(Meth)acrylic Resin (A)>

Examples of the (meth)acrylic resin (A) used in the present invention include those composed mainly of a structural unit derived from methyl methacrylate. The content of the structural unit derived from methyl methacrylate (methyl methacrylate unit) in the (meth)acrylic resin (A) is preferably 50% by mass or more, more preferably 80% by mass or more, still more preferably 90% by mass or more, and particularly preferably 95% by mass or more, from the viewpoint of heat resistance, and all the structural units may be methyl methacrylate units.

The (meth)acrylic resin (A) may contain a structural unit derived from other monomer other than methyl methacrylate. The other monomer is not particularly limited as long as it is copolymerizable with methyl methacrylate, and examples thereof include acrylic acid esters such as methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, 2-ethylhexyl acrylate, pentadecyl acrylate, dodecyl acrylate, phenyl acrylate, benzyl acrylate, phenoxyethyl acrylate, 2-hydroxyethyl acrylate, 2-ethoxyethyl acrylate, glycidyl acrylate, allyl acrylate, cyclohexyl acrylate, norbornyl acrylate, and isobornyl acrylate; methacrylic acid esters other than methyl methacrylate, such as ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, 2-ethylhexyl methacrylate, pentadecyl methacrylate, dodecyl methacrylate, phenyl methacrylate, benzyl methacrylate, phenoxyethyl methacrylate, 2-hydroxyethyl methacrylate, 2-ethoxyethyl methacrylate, glycidyl methacrylate, allyl methacrylate, cyclohexyl methacrylate, norbornyl methacrylate, and isobornyl methacrylate; unsaturated carboxylic acids or acid anhydrides thereof, such as acrylic acid, methacrylic acid, maleic anhydride, maleic acid, and itaconic acid; olefins such as ethylene, propylene, 1-butene, isobutylene, and 1-octene; conjugated dienes such as butadiene, isoprene, and myrcene; aromatic vinyl compounds such as styrene, $\alpha$-methylstyrene, p-methylstyrene, and m-methylstyrene; acrylamide, methacrylamide, acrylonitrile, methacrylonitrile, vinyl acetate, vinyl pyridine, vinyl ketone, vinyl chloride, vinylidene chloride, and vinylidene fluoride.

The stereoregularity of the (meth)acrylic resin (A) is not particularly limited, and for example, a resin having stereoregularity such as isotactic, heterotactic, or syndiotactic can be used.

The (meth)acrylic resin composition of the present invention may contain only one type of (meth)acrylic resin as the (meth)acrylic resin (A), but preferably contains two or more types of (meth)acrylic resins, and more preferably contains three or more types of (meth)acrylic resins, because the effects of the present invention are more exhibited. Among them, the (meth)acrylic resin (A) preferably contains at least two kinds of (meth)acrylic resins (A-1) and (A-2) having different melt flow rates (MFR), more preferably contains at least three kinds of (meth)acrylic resins (A-1), (A-2), and (A-3) having different MFRs, and particularly preferably consists of the (meth)acrylic resins (A-1), (A-2), and (A-3).

[(Meth)acrylic Resin (A-1)]

The (meth)acrylic resin (A-1) mainly plays a role of maintaining the resulting film with high performance while lowering the complex viscosity of the (meth)acrylic resin composition of the present invention. The weight average molecular weight of the (meth)acrylic resin (A-1) is preferably lower than the weight average molecular weight of the (meth)acrylic resin (A-3) described later. From the viewpoint of heat resistance and moldability of the film, the lower limit of the content of the methyl methacrylate unit in the (meth)acrylic resin (A-1) is preferably 85% by mass, and may be, for example, 90% by mass, and or may be, for example, 94% by mass, and the upper limit thereof is preferably 97% by mass, and may be, for example, 96.5% by mass, or may be, for example, 96% by mass.

The lower limit of the weight average molecular weight of the (meth)acrylic resin (A-1) is preferably 66000, and may be, for example, 68000, or may be, for example, 70000, and the upper limit thereof is preferably 92000, and may be, for example, 80000, or may be, for example, 75000. When the weight average molecular weight of the (meth)acrylic resin (A-1) is 66000 or more, mechanical properties can be improved, and when the weight average molecular weight of the (meth)acrylic resin (A-1) is 92000 or less, the (meth)acrylic resin (A-1) can serve as a compatibilizer.

The (meth)acrylic resin (A-1) has an MFR of preferably more than 5 g/10 min and less than 20 g/10 min, more preferably 7 g/10 min or more and 18 g/10 min or less, and still more preferably 9 g/10 min or more and 16 g/10 min or less, under conditions of a temperature of 230°C and a load of 3.8 kg. When the MFR of the (meth)acrylic resin (A-1) is more than 5 g/10 min, the initial differential pressure at the front and back of the polymer filter and the increase in the differential pressure can be suppressed, and when the MFR is less than 20 g/10 min, the mechanical properties can be improved.

The MFR can be measured under the above-mentioned conditions in conformity with JIS K7210-1:2014 as described in Examples.

The content of the (meth)acrylic resin (A-1) is preferably 15 to 98 parts by mass, more preferably 20 to 75 parts by mass, and still more preferably 25 to 65 parts by mass with respect to 100 parts by mass of the (meth)acrylic resin (A) from the viewpoints of the complex viscosity of the (meth)acrylic resin composition and the physical properties of a film to be obtained.

[(Meth)acrylic Resin (A-2)]

The (meth)acrylic resin (A-2) is added mainly for the purpose of acting as a compatibilizer for enhancing the dispersibility of the (meth)acrylic crosslinked rubber particles (B) in the (meth)acrylic resin composition of the present invention, and for example, in the case of the above purpose, the content of the methyl methacrylate unit in the (meth)acrylic resin (A-2) is preferably between (including the same content) the content of the methyl methacrylate unit in the (meth)acrylic resin (A-1) and the content of the methyl methacrylate unit in a thermoplastic polymer (II) constituting the outermost layer of the (meth)acrylic crosslinked rubber particles (B) to be described later. The content of the methyl methacrylate unit in the (meth)acrylic resin (A-2) is preferably 80% to 97% by mass, more preferably 84% to 94% by mass, and still more preferably 88% to 92% by mass, from the viewpoint of heat resistance and moldability of a film to be obtained. The component to be copolymerized other than methyl methacrylate is preferably methyl acrylate from the viewpoint of heat resistance and heat stability.

The weight average molecular weight of the (meth)acrylic resin (A-2) is preferably lower than the weight average molecular weight of the (meth)acrylic resin (A-1).

The weight average molecular weight of the (meth)acrylic resin (A-2) is preferably 40000 to 65000, more preferably 45000 to 63000, and still more preferably 50000 to 62000. When the weight average molecular weight of the (meth)acrylic resin (A-2) is 40,000 or more, mechanical properties can be improved, and when the weight average molecular weight of the (meth)acrylic resin (A-2) is 65,000 or less, the (meth)acrylic resin (A-2) can serve as a compatibilizer.

The (meth)acrylic resin (A-2) has an MFR of preferably 20 g/10 min or more, more preferably 23 g/10 min or more, and still more preferably 25 g/10 min or more, under conditions of a temperature of 230°C and a load of 3.8 kg. When the MFR of the (meth)acrylic resin (A-2) is 20 g/10 min or more, it can contribute to the compatibilization effect and the suppression of the initial differential pressure at the front and back of the polymer filter and of the increase in the differential pressure. The upper limit is not particularly limited, but is preferably 100 g/10 min.

The content of the (meth)acrylic resin (A-2) is preferably 2 to 15 parts by mass, more preferably 7 to 15 parts by mass, and still more preferably 10 to 15 parts by mass with respect to 100 parts by mass of the (meth)acrylic resin (A) from the viewpoints of the complex viscosity of the (meth)acrylic resin composition and the physical properties of a film to be obtained.

[(Meth)acrylic Resin (A-3)]

The content of the methyl methacrylate unit in the (meth)acrylic resin (A-3) is preferably 95% by mass or more, more preferably 97% by mass or more, and still more preferably 98% by mass or more. When the content of the methyl methacrylate unit in the (meth)acrylic resin (A-3) is 95% by mass or more, heat resistance can be improved.

Further, the weight average molecular weight of the (meth)acrylic resin (A-3) is preferably 93000 to 150000, more preferably 94000 to 120000, and still more preferably 95000 to 100000. When the weight average molecular weight of the (meth)acrylic resin (A-3) is 93000 or more, heat resistance and mechanical properties can be improved, and when the weight average molecular weight of the (meth)acrylic resin (A-3) is 150000 or less, complex viscosity can be prevented from being excessively increased, and processability can be improved.

The (meth)acrylic resin (A-3) has an MFR of preferably 5 g/10 min or less, more preferably 4 g/10 min or less, and still more preferably 3 g/10 min or less, under conditions of a temperature of 230°C and a load of 3.8 kg. When the MFR of the (meth)acrylic resin (A-3) is 5 g/10 min or less, mechanical properties can be improved. The lower limit is not particularly limited, but is preferably 0.1 g/10 min.

The content of the (meth)acrylic resin (A-3) is preferably 0 to 83 parts by mass, more preferably 20 to 75 parts by mass, and still more preferably 30 to 70 parts by mass with respect to 100 parts by mass of the (meth)acrylic resin (A) from the viewpoints of the complex viscosity of the (meth)acrylic resin composition and the physical properties of a film to be obtained.

The molecular weight distribution of the (meth)acrylic resin (A) is represented by a ratio (Mw/Mn) of a weight average molecular weight (Mw) to a number average molecular weight (Mn) measured by GPC, and is preferably 1.05 to 3, and more preferably 1.3 to 2.5.

When the (meth)acrylic resin (A) contains a plurality of (meth)acrylic resins, at least one (meth)acrylic resin preferably satisfies the above range, more preferably two or more (meth)acrylic resins satisfy the above range, and still more preferably all (meth)acrylic resins satisfy the above range.

When the molecular weight distribution is 1.05 or more, molding processability is improved, and when the molecular weight distribution is 3 or less, physical properties such as creep characteristics can be improved.

The weight average molecular weight (Mw) can be measured by the method described in Examples, and the number average molecular weight (Mn) can also be measured at the same time.

The method for producing the (meth)acrylic resin (A) is not particularly limited, and for example, the (meth)acrylic resin (A) can be obtained by polymerizing a monomer containing methyl methacrylate as a main component. The molecular weight distribution (Mw/Mn) of the (meth)acrylic resin (A) can be adjusted by the amounts of the polymerization initiator and the chain transfer agent, the polymerization temperature, and the like.

The (meth)acrylic resin (A) can be produced by a bulk polymerization method, a solution polymerization method, a suspension polymerization method, an emulsion polymerization method, or the like. Among them, either a bulk polymerization method or a solution polymerization method is preferable. Particularly, a bulk polymerization method is preferable, and among the bulk polymerization methods, a continuous bulk polymerization method is preferable.

The content of the (meth)acrylic resin (A) in the (meth)acrylic resin composition of the present invention is not particularly limited, but is preferably 60 to 95% by mass, more preferably 65 to 90% by mass, and still more preferably 70 to 85% by mass. When the content of the (meth)acrylic resin (A) is within the above range, a (meth)acrylic resin composition having excellent strength can be obtained.

<(Meth)acrylic Crosslinked Rubber Particles (B)>

The (meth)acrylic crosslinked rubber particles (B) used in the present invention are preferably rubber particles containing a polymer containing a structural unit derived from an alkyl acrylate ester (alkyl acrylate ester unit), and may be particles composed of a single polymer or may be particles in which polymers having different elastic moduli form at least two layers. The content of the alkyl acrylate ester unit in the (meth)acrylic crosslinked rubber particles (B) is preferably 20 to 60% by mass, more preferably 25 to 50% by mass, and still more preferably 30 to 40% by mass, from the viewpoint of toughness of a film obtained from the (meth)acrylic resin composition of the present invention.

Further, from the viewpoint of impact resistance of a film obtained from the (meth) acrylic resin composition of the present invention, the (meth) acrylic crosslinked rubber particles (B) are preferably a core-shell type graft copolymer which is a crosslinked rubber particle having an outermost layer and an inner layer. The type of such crosslinked rubber particles is not particularly limited as long as they have an outermost layer and an inner layer, and various laminated structures such as two layer polymer particles having a core (inner layer) of a crosslinked rubber polymer (I) and an outer shell (outermost layer) of a thermoplastic polymer (II); three layer polymer particles having a core (inner layer) of a polymer (III), an inner shell (inner layer) of a crosslinked rubber polymer (I) and an outer shell (outermost layer) of a thermoplastic polymer (II); and four layer polymer particles having a core (inner layer) of a crosslinked rubber polymer (I), a first inner shell (inner layer) of a polymer (III), a second inner shell (inner layer) of a crosslinked rubber polymer (I) and an outer shell (outermost layer) of a thermoplastic polymer (II) are possible, but three layer polymer particles are preferable.

Hereinafter, a core-shell type graft copolymer will be described as an example of the (meth)acrylic crosslinked rubber particles (B).

The crosslinked rubber polymer (I) preferably contains 70% to 98% by mass, more preferably 75% to 90% by mass, and still more preferably 80% to 85% by mass of a structural unit derived from an alkyl acrylate ester in which the alkyl group has 1 to 8 carbon atoms, with respect to the mass of the crosslinked rubber polymer (I). When the content is within the above range, a soft rubber material can be obtained and impact resistance can be imparted. The crosslinked rubber polymer (I) preferably contains a structural unit derived from an aromatic vinyl monomer in an amount of 2 to 30% by mass, more preferably 10 to 25% by mass, and still more preferably 15 to 20% by mass with respect to the mass of the crosslinked rubber polymer (I). When the content is within the above range, the refractive index of the crosslinked rubber polymer (I) can be adjusted so as to match that of the (meth)acrylic resin (A), and a (meth)acrylic resin composition having high transparency can be obtained.

The crosslinked rubber polymer (I) preferably contains a structural unit derived from a crosslinkable monomer in an amount of 1 to 5% by mass, and more preferably 1 to 3% by mass with respect to the mass of the crosslinked rubber polymer (I). When the content is within the above range, the crosslink density becomes appropriate, and the behavior as a rubber material becomes favorable.

The thermoplastic polymer (II) preferably contains 80 to 100% by mass, more preferably 85 to 97% by mass, and still more preferably 90 to 96% by mass of a methyl methacrylate unit, with respect to the mass of the thermoplastic polymer (II). When the content is within the above range, compatibility with the (meth)acrylic resin (A) is improved.

The thermoplastic polymer (II) preferably contains 0 to 20% by mass, more preferably 3 to 15% by mass, and still more preferably 4 to 10% by mass of a structural unit derived from an alkyl acrylate ester in which the alkyl group has 1 to 8 carbon atoms, with respect to the mass of the thermoplastic polymer (II). When the content is within the above range, compatibility with the (meth)acrylic resin (A) is improved.

The polymer (III) preferably contains 80 to 99.95% by mass, more preferably 85 to 98% by mass, and still more preferably 90 to 96% by mass of a methyl methacrylate unit, with respect to the mass of the polymer (III). When the content is within the above range, the hardness becomes favorable, which is preferable.

The polymer (III) preferably contains 0 to 19.95% by mass of a structural unit derived from an alkyl acrylate ester in which the alkyl group has 1 to 8 carbon atoms and 0.05 to 2% by mass of a crosslinkable monomer, more preferably contains 2 to 15% by mass of a structural unit derived from an alkyl acrylate ester in which the alkyl group has 1 to 8 carbon atoms and 0.05 to 1.5% by mass of a structural unit derived from a crosslinkable monomer, and still more preferably contains 4 to 10% by mass of a structural unit derived from an alkyl acrylate ester monomer in which the alkyl group has 1 to 8 carbon atoms and 0.1 to 1% by mass of a structural unit derived from a crosslinkable monomer, with respect to the mass of the polymer (III). When the content is within the above range, the hardness is improved.

The content of each monomer is calculated for each layer. For example, in the four layer polymer particle, when both the core (inner layer) and the second inner shell (inner layer) are composed of the crosslinked rubber polymer (I), the content of the structural unit derived from each monomer is calculated separately for the core (inner layer) and the second inner shell (inner layer).

From the viewpoint of transparency of the core-shell type graft copolymer, the polymer contained in each layer is preferably selected such that the difference in refractive index between adjacent layers is preferably less than 0.005, more preferably less than 0.004, and still more preferably less than 0.003.

The mass ratio of the inner layer to the outermost layer (inner layer/outermost layer) in the core-shell type graft copolymer is preferably 30/70 to 95/5, and more preferably 70/30 to 90/10.

In the description herein, the outermost layer of the core-shell type graft copolymer refers to the outermost layer of the particle, and the inner layer refers to all layers inside the outermost layer. In the inner layer, the proportion of the layer containing the crosslinked rubber polymer (I) is preferably 20 to 70% by mass, and more preferably 40 to 60% by mass.

The method for producing the core-shell type graft copolymer is not particularly limited and can be carried out by a known method, but an emulsion polymerization method is suitable. Specifically, a core-shell type graft copolymer can be obtained by emulsion polymerization of the monomer that constitutes the core (inner layer) to obtain seed particles, and then sequentially adding the monomer that constitutes each layer in the presence of these seed particles to sequentially polymerize up to the outermost layer.

Examples of the emulsifier used in the emulsion polymerization method include:

anionic emulsifiers such as dialkylsulfosuccinates e.g., sodium dioctylsulfosuccinate and sodium dilaurylsulfosuccinate, alkylbenzenesulfonates e.g., sodium dodecylbenzenesulfonate, and alkylsulfates e.g., sodium dodecylsulfate;

nonionic emulsifiers such as polyoxyethylene alkyl ethers and polyoxyethylene nonylphenyl ethers; and nonionic and anionic emulsifiers such as polyoxyethylene nonylphenyl ether sulfates e.g., sodium polyoxyethylene nonylphenyl ether sulfate, polyoxyethylene alkyl ether sulfates e.g., sodium polyoxyethylene alkyl ether sulfate, and alkyl ether carboxylates e.g., sodium polyoxyethylene tridecyl ether acetate.

These may be used alone or in combination of two or more thereof.

The average number of repeating units of the ethylene oxide unit in the exemplified compounds of the nonionic emulsifier and the nonionic and anionic emulsifier is preferably 30 or less, more preferably 20 or less, and still more preferably 10 or less in order to prevent the foamability of the emulsifier from becoming extremely large.

The polymerization initiator used in the emulsion polymerization is not particularly limited, and examples thereof include persulfate-based initiators such as potassium persulfate and ammonium persulfate; and redox-based initiators such as persulfoxylate/organic peroxide and persulfate/sulfites.

The core-shell type graft copolymer can be separated and obtained from the polymer latex obtained by emulsion polymerization by a known method such as a salting-out coagulation method, a freeze coagulation method, or a spray drying method. Among them, a salting-out coagulation method and a freeze coagulation method are preferable, and a freeze coagulation method is more preferable, because impurities contained in the crosslinked rubber particle component can be easily removed by washing with water. Since the freeze coagulation method does not use a coagulant, a film having excellent water resistance is easily obtained. In order to remove foreign matters mixed in the polymer latex before the coagulation step, the polymer latex is preferably filtered with a wire net having an opening of 50 $\mu$m or less. From the viewpoint of easy uniform dispersion in melt-kneading with the (meth)acrylic resin (A), the core-shell type graft copolymer is preferably taken out as aggregated particles having a particle size of 1,000 $\mu$m or less, and more preferably taken out as aggregated particles having a particle size of 500 $\mu$m or less. The form of the aggregated particles is not particularly limited, and for example, the aggregated particles may be in the form of pellets in which the outermost layer portions are fused to each other, or may be in the form of powder or granular powder.

The average particle diameter of the (meth)acrylic crosslinked rubber particles (B) in the present invention is preferably 0.05 to 1 $\mu$m, more preferably 0.07 to 0.5 $\mu$m, still more preferably 0.1 to 0.4 $\mu$m, and particularly preferably 0.15 to 0.3 $\mu$m. When the (meth)acrylic crosslinked rubber particles (B) having an average particle diameter within the above range are used, toughness can be imparted to a film with a small amount of the (meth)acrylic crosslinked rubber particles (B), and the possibility of impairing rigidity and surface hardness can be suppressed.

The average particle diameter in the present specification is an arithmetic average value in a volume-based particle size distribution measured by a light scattering method, and specifically can be determined by the method described in Examples.

The content of the (meth)acrylic crosslinked rubber particles (B) in the (meth)acrylic resin composition of the present invention is not particularly limited, but is preferably 5 to 40% by mass, more preferably 10 to 35% by mass, and still more preferably 15 to 30% by mass. When the content of the (meth)acrylic crosslinked rubber particles (B) is within the above range, a (meth)acrylic resin composition having an excellent balance between hardness and impact resistance can be obtained.

<Other Additives>

To the (meth)acrylic resin composition of the present invention, various additives, for example, a polymer processing aid (C), an ultraviolet absorber (D), an antioxidant (E), an aliphatic alcohol, a heat stabilizer, a lubricant, an antistatic agent, a colorant, an impact resistance aid and the like may be added as necessary, as long as the effects of the present invention are not impaired. From the viewpoint of the mechanical properties and the surface hardness of the (meth)acrylic resin film of the present invention, it is preferable not to add a large amount of a foaming agent, a filler, a matting agent, a light diffusing agent, a softening agent or a plasticizer.

<Polymer Processing Aid (C)>

The (meth)acrylic resin composition of the present invention preferably further contains a polymer processing aid (C) as the other additive described above. The polymer processing aid (C) is a compound that exhibits effects on thickness accuracy, film formation stability, and the like when molding the (meth)acrylic resin composition of the present invention. As the polymer processing aid (C), a methacrylic resin having an ultrahigh molecular weight (weight average molecular weight of 500000 or more) containing a methyl methacrylate unit as a main component (for example, containing 50% by mass or more), which can be usually produced by an emulsion polymerization method, can be used, and polymer particles having a particle diameter of 0.05 to 0.5 $\mu$m are preferable.

As the polymer processing aid (C), commercially available products can be used, and specific examples thereof include "Kane Ace (registered trademark)" PA series (manufactured by Kaneka Corporation), "Metablen (registered trademark)" P series (manufactured by Mitsubishi Chemical Corporation), and "Paraloid (registered trademark)" K series (manufactured by Dow Chemical Company). Among them, "Paraloid (registered trademark)" K125P is preferable from the viewpoint of compatibility with resins.

The content of the polymer processing aid (C) in the (meth)acrylic resin composition of the present invention is preferably 0.1 to 3.0% by mass. The content of the polymer processing aid (C) varies depending on the application, but is more preferably 1.0% by mass or more, and still more preferably 1.3% by mass or more, from the viewpoint of further reducing fish eyes. In addition, from the viewpoint of suppressing cost, suppressing melt viscosity, and the like, it is more preferably 2.5% by mass or less, and still more preferably 2.0% by mass or less. In the present invention, the polymer processing aid (C) is not included in the (meth)acrylic resin (A) and the (meth)acrylic crosslinked rubber particles (B).

<Ultraviolet Absorber (D)>

The (meth)acrylic resin composition of the present invention preferably further contains an ultraviolet absorber (D). The ultraviolet absorber (D) is a compound having an ability to absorb ultraviolet rays, and mainly has a function of converting light energy into heat energy.

Examples of the ultraviolet absorber (D) include benzophenones, benzotriazoles, triazines, benzoates, salicylates, cyanoacrylates, oxalic anilides, malonic esters, and formamidines. These may be used alone or in combination of two or more thereof. Among them, benzotriazoles and triazines are preferable because of their high ability to suppress resin degradation when irradiated with ultraviolet rays and high compatibility with resins.

The ultraviolet absorber of benzotriazoles has a high effect of suppressing deterioration of optical characteristics such as coloring due to irradiation with ultraviolet rays. Examples of the ultraviolet absorber of benzotriazoles include 2-(2H-benzotriazol-2-yl)-4-(1,1,3,3-tetramethylbutyl)phenol ("Tinuvin (registered trademark)" 329 manufactured by BASF Corporation), 2-(2H-benzotriazol-2-yl)-4,6-bis(1-methyl-1-phenylethyl)phenol ("Tinuvin (registered trademark)" 234 manufactured by BASF Corporation), and 2,2'-methylenebis[6-(2H-benzotriazol-2-yl)-4-tert-octylphenol] ("Adekastab (registered trademark)" LA-31 manufactured by Adeka Corporation). Among them, 2,2'-methylenebis[6-(2H-benzotriazol-2-yl)-4-tert-octylphenol] ("Adekastab (registered trademark)" LA-31 manufactured by Adeka Corporation) is preferable from the viewpoint of compatibility with the (meth)acrylic resin composition of the present invention.

Examples of the triazine-based ultraviolet absorber include hydroxyphenyltriazine-based ultraviolet absorbers, and more specifically, 2,4-bis(2-hydroxy-4-butyloxyphenyl)-6-(2,4-butyloxyphenyl)-1,3,5-triazine ("Tinuvin (registered trademark)" 460 manufactured by BASF Corporation); 2-(4-(2-hydroxy-3-(2-ethylhexyloxy)propyloxy)-2-hydroxyphenyl)-4,6-bis(2,4-dimet hylphenyl)-1,3,5-triazine ("Tinuvin (registered trademark)" 405 manufactured by BASF Corporation); 2-(2-hydroxy-4-[1-octyloxycarbonylethoxy]phenyl)-4,6-bis(4-phenylphenyl)-1,3,5-t riazine ("Tinuvin (registered trademark)" 479 manufactured by BASF Corporation), "Tinuvin (registered trademark)" 1477, 400, 477, and 1600 manufactured by BASF Corporation; 2-(4,6-diphenyl-1,3,5-triazin-2-yl)-5-(2-(2-ethylhexanoyloxy)ethoxy) phenol ("Adekastab (registered trademark)" LA-46 manufactured by Adeka Corporation); 2,4,6-tris(2-hydroxy-4-hexyloxy-3-methylphenoxy)-1,3,5-triazine ("Adekastab (registered trademark)" LA-F70 manufactured by Adeka Corporation); 2-[4-[(2-hydroxy-3-dodecyloxypropyl)oxyl-2-hydroxyphenyl]-4,6-bis(2,4-dimethylp henyl)-1,3,5-triazine; and 2-[4-[(2-hydroxy-3-tridecyloxypropyl)oxy]-2-hydroxyphenyl-4,6-bis(2,4-dimethylph enyl)-1,3,5-triazine.

The content of the ultraviolet absorber (D) in the (meth)acrylic resin composition of the present invention is preferably 0.1 to 4.0% by mass. The content of the ultraviolet absorber (D) varies depending on the type and application of the ultraviolet absorber (D), but is more preferably 0.2% by mass or more, and still more preferably 0.4% by mass or more. In addition, the content is more preferably 3.8% by mass or less, and still more preferably 3.5% by mass or less, from the viewpoint of suppressing cost.

<Antioxidant (E)>

The antioxidant (E) used in the present invention is not particularly limited, and examples thereof include hindered phenol-based antioxidants and phosphorus-based antioxidants, and hindered phenol-based antioxidants are particularly preferable.

Specific examples of the hindered phenol-based antioxidant include, but are not particularly limited to, pentaerythritol tetrakis(3-(3,5-di-tert-butyl-4-hydroxyphenyl)propionate), thiodiethylene bis(3-(3,5-di-tert-butyl-4- hydroxyphenyl)propionate), octadecyl-3-(3,5-di-tert-butyl-4-hydroxyphenyl)propionate, N,N'-hexane-1,6-diylbis(3-(3,5-di-tert-butyl-4-hydroxyphenyl)propionamide), diethyl((3,5-bis(1,1-dimethylethyl)-4-hydroxyphenyl)methyl)phosphate, 3,3',3",5,5',5"-hexa-tert-butyl-a,a',a"-(mesitylene-2,4,6-triyl)tri-p-cresol, ethylenebis(oxyethylene)bis(3-(5-tert-butyl-4-hydroxy-m-tolyl)propionate), hexamethylene bis(3-(3,5-di-tert-butyl-4-hydroxyphenyl)propionate), 1,3,5-tris(3,5-di-tert-butyl-4-hydroxybenzyl)-1,3,5-triazine-2,4,6(1H,3H,5H)-trione, 1,3,5-tris((4-tert-butyl-3-hydroxy-2,6-xylyl)methyl)- 1,3,5-triazin-2,4,6(1H, 3H, 5H)-trione, 2,6-di-tert-butyl-4-(4,6-bis(octylthio)-1,3,5-triazin-2-ylamino)phenol, and 3,9-bis(2-(3-(3-tert-butyl-4-hydroxy-5-methylphenyl)propionyloxy)-1,1-dimethylet hyl)-2,4,8,10- tetraoxaspiro(5,5)undecane. These may be used alone, or two or more of these may be used in combination.

Further, a commercially available phenol-based antioxidant may be used as the hindered phenol-based antioxidant, and specific examples of such a commercially available phenol-based antioxidant include, but are not limited to, Irganox (registered trademark) 1010, Irganox (registered trademark) 1076, Irganox (registered trademark) 1330, Irganox (registered trademark) 3114, and Irganox (registered trademark) 3125 (all trade names, manufactured by BASF Japan Ltd.), Sumilizer (registered trademark) BHT, Sumilizer (registered trademark) GA-80, and Sumilizer (registered trademark) GS (all trade names, manufactured by Sumitomo Chemical Company, Limited), Cyanox 1790 (trade name, manufactured by Cytec Industries Inc.), and Vitamin E (manufactured by Eisai Co., Ltd.). These may be used alone, or two or more of these may be used in combination. In particular, Irganox (registered trademark) 1010 is preferable from the viewpoint of weather resistance, compatibility with the (meth)acrylic resin, and bleed-out property of the film-formed film.

Specific examples of the phosphorus-based antioxidant include, but are not limited to, tris(2,4-di-tert-butylphenyl) phosphite, bis(2,4-bis(1,1-dimethylethyl)-6-methylphenyl) ethyl ester phosphite, tetrakis(2,4-di-tert-butylphenyl)(1,1-biphenyl)-4,4'-diylbisphosphonite, bis(2,4-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, tetrakis(2,4-tert-butylphenyl)(1,1-biphenyl)-4,4'-diylbisphosphonite, di-tert-butyl-m-cresyl phosphonite, and tris(2-((2,4,8,10-tetra-tert-butyldibenzo[d,f][1,3,2]dioxaphosphefin-6-yl)oxy)ethyl) amine. These may be used alone, or two or more of these may be used in combination.

A commercially available phosphorus-based antioxidant may be used as the phosphorus-based antioxidant, and specific examples of such a commercially available phosphorus-based antioxidant include, but are not limited to, Irgafos (registered trademark) 168, Irgafos (registered trademark) 12, and Irgafos (registered trademark) 38 (all trade names, manufactured by BASF Japan Ltd.), Adekastab (registered trademark) 329K, Adekastab (registered trademark) PEP-36, and Adekastab (registered trademark) PEP-8 (all trade names, manufactured by Adeka Corporation), Sandostab P-EPQ (trade name, manufactured by Clariant Japan K.K.), Weston 618, Weston 619G, Ultranox 626 (all trade names, manufactured by GE Speciality Chemicals), and Sumilizer (registered trademark) GP (trade name, manufactured by Sumitomo Chemical Company, Limited). These may be used alone, or two or more of these may be used in combination.

The combination of the ultraviolet absorber (D) and the antioxidant (E) in the present invention is preferably a combination of a benzotriazole-based ultraviolet absorber and a hindered phenol-based antioxidant from the viewpoint of compatibility.

When the (meth)acrylic resin composition contains the antioxidant (E), the content thereof is preferably 0.005 to 10 parts by mass, more preferably 0.008 to 1 part by mass, and still more preferably 0.01 to 0.2 parts by mass with respect to 100 parts by mass of the total of the (meth)acrylic resin (A) and the (meth)acrylic crosslinked rubber particles (B). When the content of the antioxidant (E) is within the above range, sufficient antioxidant performance can be imparted to the molded body made of the (meth)acrylic resin composition.

<Other Polymers>

The (meth)acrylic resin composition of the present invention may further contain a polymer other than the (meth)acrylic resin (A), the (meth)acrylic crosslinked rubber particles (B), and the polymer processing aid (C) which may be a polymer, as long as the effects of the present invention are not impaired. Examples of the other polymer include polyolefin resins such as polyethylene, polypropylene, polybutene-1, poly-4-methylpentene-1, and polynorbornene; ethylene-based ionomers; styrene-based resins such as polystyrene, styrene-maleic anhydride copolymer, high-impact polystyrene, acrylonitrile copolymer-styrene (AS resin), acrylonitrile-butadiene-styrene copolymer (ABS resin), acrylonitrile-ethylenepropylene-styrene copolymer (AES resin), acrylonitrile-acrylic elastic body-styrene copolymer (AAS resin), acrylonitrile-chlorinated polyethylene-styrene copolymer (ACS resin), and methyl methacrylate-butadiene-styrene copolymer (MBS resin); methyl methacrylate-styrene copolymers; polyester resins such as polyethylene terephthalate and polybutylene terephthalate; polyamides such as nylon 6, nylon 66, and polyamide elastomers; polycarbonate, polyvinyl chloride, polyvinylidene chloride, polyvinyl alcohol, ethylene-vinyl alcohol copolymer, polyacetal, polyvinylidene fluoride, polyurethane, modified polyphenylene ether, polyphenylene sulfide, and silicone-modified resins; acrylic rubbers and silicone rubbers; styrene-based thermoplastic elastomers such as styrene-ethylene/propylene-styrene copolymer (SEPS), styrene-ethylenelbutylene-styrene copolymer (SEBS), and styrene-isoprene-styrene copolymer (SIS); and olefin-based rubbers such as isoprene rubber (IR), ethylene-propylene copolymer (EPR), and ethylene-propylene-diene terpolymer (EPDM).

<(Meth)acrylic Resin Composition>

The complex viscosity of the (meth)acrylic resin composition of the present invention under the measurement conditions of 265°C, 10 rad/sec, and 1% strain is 500 to 1300 Pa·s.
When the complex viscosity is lower than 500 Pa·s, the toughness of the film may decrease. On the other hand, when the complex viscosity is larger than 1300 Pa·s, the initial differential pressure at the front and back of the polymer filter tends to be large, the pressure difference rises quickly, and not only the time required to reach the pressure-proof value of the polymer filter element becomes short, but also the pressure causes a problem of lowering the appearance quality of the product such as inclusion of foreign matter due to the expansion of the opening of the filtration portion, which may reduce the production stability during continuous production. From such a viewpoint, the complex viscosity is preferably 600 to 1200 Pa·s, and more preferably 700 to 1200 Pa·s.
It is known that when a molten resin (molten resin composition) passes through a polymer filter, the shear rate of the molten resin is low. On the other hand, in the high shear rate region (for example, $\geq 100$ sec$^{-1}$) and the low shear rate region (for example, $\leq 10$ sec$^{-1}$), the degree of expression of the non-Newtonian property is different due to the influence of the molecular weight distribution, the cross-linking structure, or the like, and thus the difference in viscosity between the materials in each speed region is not necessarily the same. Therefore, when the resin flow in the polymer filter is assumed, it is possible to suppress the initial differential pressure of the polymer filter and the rising speed of the differential pressure by controlling the complex viscosity in the low shear rate region.
The complex viscosity can be adjusted by the weight average molecular weight and composition ratio of each of the (meth)acrylic resins (A-1), (A-2), and (A-3) in the (meth)acrylic resin (A), the mass ratio of the (meth)acrylic resin (A) to the (meth)acrylic crosslinked rubber particles (B), the content of other additives, and the like, and can also be adjusted by using two or more (meth)acrylic resins (A) having different MFRs. Specifically, the complex viscosity can be measured by the method described in Examples.
The method for preparing the (meth)acrylic resin composition of the present invention is not particularly limited, but a melt-kneading method is preferable. Specifically, a method is generally used in which the (meth)acrylic resin (A), the (meth)acrylic crosslinked rubber particles (B), and, if necessary, other additives such as a polymer processing aid (C), an ultraviolet absorber (D) and an antioxidant (E) and other polymers are dry-blended in advance and melt-kneaded. The mixing operation can be carried out using a known mixing or kneading apparatus such as a kneader-extruder, an extruder, a mixing roll, or a Banbury mixer. In particular, from the viewpoint of kneadability and productivity, it is preferable to use a twin-screw extruder. The shear rate during melt-kneading is preferably 10 to 1,000/sec. The temperature during mixing and kneading is usually 150 to 320°C, and preferably 200 to 300°C. When melt-kneading is performed using a twin-screw extruder, it is preferable to perform melt-kneading under reduced pressure or under a nitrogen gas stream using a vent from the viewpoint of suppressing coloring. In this way, the (meth)acrylic resin composition of the present invention can be obtained, for example, in the form of pellets.
The lower limit of the total content of the (meth)acrylic resin (A) and the (meth)acrylic crosslinked rubber particles (B) in the (meth)acrylic resin composition of the present invention is usually 50% by mass, preferably 70% by mass, more preferably 80% by mass, and still more preferably 90% by mass. The upper limit is preferably 99.97% by mass, more preferably 99% by mass, and still more preferably 97% by mass.

<(Meth)acrylic Resin Film>

The (meth)acrylic resin film (hereinafter, also simply referred to as a film) of the present invention is composed of the (meth)acrylic resin composition, and is obtained by molding the (meth)acrylic resin composition.

The (meth)acrylic resin film of the present invention can be produced by a known method such as a T-die method, an inflation method, a melt casting method, or a calendering method. From the viewpoint of obtaining a film having good surface smoothness and low haze, it is preferable to include a step of melt-kneading the (meth)acrylic resin composition of the present invention, extruding it in a molten state from a T-die, and molding it by bringing both surfaces thereof into contact with a mirror surface roll surface or a mirror surface belt surface. The roll or belt used at this time is preferably made of metal. When both surfaces of the melt-kneaded product thus extruded are brought into contact with mirror surfaces to form a film, the melt-kneaded product (which may be in the form of a film) is preferably pressed and sandwiched between mirror surface rolls or mirror surface belts. The higher the sandwiching force by the mirror surface rolls or the mirror surface belts, the more preferable, and the linear pressure is preferably 10 N/mm or more, and more preferably 20 N/mm or more. In addition, the surface temperature of the mirror surface rolls or the mirror surface belts to be sandwiched is preferably 60°C or higher, and more preferably 70°C or higher. Further, the temperature is preferably 130°C or lower, and more preferably 100°C or lower. When the surface temperature of the mirror surface rolls or the mirror surface belts sandwiching the melt-kneaded product is 60°C or higher, the surface smoothness of the resulting film is improved and haze can be reduced, and when the surface temperature is 130°C or lower, excessive adhesion between the film and the mirror surface rolls or the mirror surface belts can be suppressed, and surface roughness, horizontal wrinkles, and the like generated when the film is peeled off from the mirror surface roll or the mirror surface belt can be prevented, and the appearance of the film can be improved.

In the case of the production method by the T-die method, an extruder type melt extrusion apparatus equipped with a single screw or twin screw extrusion screw can be used. The melt extrusion temperature for producing the (meth)acrylic resin film of the present invention is preferably 230°C or higher, and more preferably 240°C or higher. Further, the melt extrusion temperature is preferably 290°C or lower, and more preferably 280°C or lower. In the case of using a melt extrusion apparatus, it is preferable to perform melt extrusion under reduced pressure using a vent from the viewpoint of suppressing coloring, to attach a gear pump from the viewpoint of producing a film having a uniform film thickness, and to further attach a polymer filter in order to reduce a fish eye defect and perform melt extrusion. Further, from the viewpoint of suppressing oxidative deterioration, it is preferable to perform melt extrusion under a nitrogen stream.

The initial differential pressure at the front and back of the polymer filter is preferably 2.0 to 5.5 MPa, more preferably 3.0 to 5.0 MPa, and still more preferably 3.5 to 4.5 MPa. When the initial differential pressure at the front and back of the polymer filter is 2.0 MPa or more, it is possible to suppress a decrease in the pressure rising ability at the T-die lip portion, and it is possible to make the film thickness in the width direction uniform. On the other hand, when it is 5.5 MPa or less, the rate of increase in the differential pressure at the front and back of the polymer filter can be prevented from becoming too large, the time required to reach the resin pressure resistance value of the filter element can be prevented from becoming too short, the opening of the filtration portion can be prevented from becoming too large due to the pressure, the inclusion of foreign matter into the film can be suppressed, the appearance quality of the product can be improved, and the continuous productivity can be improved.

When the (meth)acrylic resin film of the present invention is produced by an extrusion apparatus including a vent, a gear pump, a polymer filter, and a T-die in this order, the temperature from the vent to the T-die including the gear pump and the polymer filter is preferably controlled in the range of 230 to 290°C. By producing a film in such a temperature range, a film having less deterioration, less fish eyes, and excellent mechanical properties and optical properties can be obtained.

The thickness of the (meth)acrylic resin film of the present invention is preferably 20 to 500 $\mu$m, more preferably 30 to 300 $\mu$m, still more preferably 40 to 100 $\mu$m, and even more preferably 50 to 80 $\mu$m. When the thickness of the (meth)acrylic resin film is 20 $\mu$m or more, the film has good handleability, and when the thickness of the (meth)acrylic resin film is 500 $\mu$m or less, the film can be handled in a roll shape.

The haze of the (meth)acrylic resin film of the present invention is preferably 1.5% or less, more preferably 1.2% or less, and still more preferably 1.0% or less at a thickness of 60 $\mu$m. Within the above range, when the film is used for applications requiring design properties, surface gloss and sharpness of a pattern layer printed on the film of the present invention become more excellent. In addition, in optical applications such as a polarizer protective film and a light guide film, the use efficiency of a light source is increased, which is preferable. Further, it is preferable because it is excellent in shaping accuracy when performing surface shaping.

In the (meth)acrylic resin film of the present invention, the tensile elongation at break in the MD direction (direction parallel to the flow of film processing) measured in conformity with JIS K 7127:1999 is preferably 7% or more, more preferably 10% or more, and still more preferably 12% or more, from the viewpoint of handleability in a polarizing plate production process or the like. When the tensile elongation at break is 7% or more, toughness is improved and handleability can be enhanced.

The tensile elongation at break can be specifically determined by the method described in Examples.

The (meth)acrylic resin film of the present invention may be subjected to a stretching treatment. By the stretching treatment, the mechanical strength is increased and a film which is hardly cracked can be obtained. The stretching method is not particularly limited, and examples thereof include a simultaneous biaxial stretching method, a sequential biaxial stretching method, a tubular stretching method, and a rolling method. The lower limit of the temperature during stretching is preferably a temperature 5°C higher than the glass transition temperature of the (meth)acrylic resin (A), and the upper limit thereof is preferably a temperature 40°C higher than the glass transition temperature of the (meth)acrylic resin (A), from the viewpoint of uniform stretching and obtaining a high-strength film. If the stretching temperature is too low, the film tends to break during stretching, and if the stretching temperature is too high, the effect of the stretching treatment is not sufficiently exhibited and the strength of the film is hardly increased. The stretching is usually performed at a stretching rate of 100 to 5000%/min. When the stretching rate is low, the strength is hardly increased, and the productivity is also lowered. On the other hand, when the stretching rate is high, uniform stretching may be difficult due to breakage of the film or the like. Further, it is more preferable to perform heat fixation after stretching. By the heat fixation, a film having less heat shrinkage can be obtained.

The thickness of the (meth)acrylic resin film of the present invention after stretching is preferably 10 to 200 $\mu$m, and more preferably 20 to 60 $\mu$m.

The (meth)acrylic resin film of the present invention may be colored. Examples of the coloring method include, but are not particularly limited to, a method in which a pigment or dye is contained to color the (meth)acrylic resin composition itself before film formation; and a dyeing method in which a film made of the (meth)acrylic resin composition is immersed in a solution in which a dye is dispersed to color the film.

The (meth)acrylic resin film of the present invention may be printed on at least one side. Patterns such as pictures, characters and figures and colors can be imparted by printing. The pattern may be a chromatic pattern or an achromatic pattern.

The (meth)acrylic resin film of the present invention may be a laminated film or a laminate in which at least one layer of (i) a layer composed of a metal and/or a metal oxide, (ii) a thermoplastic resin layer, and (iii) a substrate layer is laminated as the other layer on at least one surface. The method of laminating the other layers is not particularly limited, and the layers can be bonded directly or via an adhesive layer. As the substrate layer, for example, a wood substrate, a non-wood fiber such as kenaf, or the like may be used. The other layer may be a single layer or a plurality of layers.

Examples of the thermoplastic resin suitable for lamination include polycarbonate, polyethylene terephthalate, polyamide, polyethylene, polypropylene, polystyrene, polyvinyl chloride, other (meth)acrylic resins, ABS resins, ethylene-vinyl alcohol resins, polyvinyl butyral, polyvinyl acetal, styrene-based thermoplastic elastomers, olefin-based thermoplastic elastomers, and acrylic thermoplastic elastomers.

The thickness of the laminated film may vary depending on the application and is not particularly limited, but is preferably 500 $\mu$m or less from the viewpoint of secondary processability.

The (meth)acrylic resin film of the present invention may be used alone, may be used as an inner layer of a laminate or a part thereof, or may be used as an outermost layer of a laminate. The other resin used for lamination is preferably a transparent resin such as a methacrylic resin from the viewpoint of the design properties of the film. From the viewpoint that the film is hardly damaged and the design properties are maintained for a long time, the film forming the outermost layer preferably has high surface hardness and high weather resistance, and is preferably a film made of the (meth)acrylic resin composition of the present invention.

The (meth)acrylic resin film of the present invention is a film having high productivity and high toughness. Taking advantage of these excellent characteristics, the film made of the (meth)acrylic resin composition of the present invention is suitably used as a decorative film, an optical film, or the like. Specific examples of the optical film include a polarizer protective film. The polarizer protective film can be used for a polarizing plate including the polarizer protective film, an image display device such as a liquid crystal display device, an organic EL display device, or a PDP including at least one polarizing plate, and the like. The film made of the (meth)acrylic resin composition of the present invention can be suitably used as a substrate film in optical relation such as a light guide film, a moth-eye film, a Fresnel lens, a lenticular lens, a front film of various displays, a diffusion film, a glass scattering prevention film, a liquid crystal ASF film, a transparent conductive film, a heat shielding film, and various barrier films.

As a more specific example, the (meth)acrylic resin film of the present invention can be suitably used for a molded article requiring design properties or a molded article requiring high optical properties, that is, a signboard component such as an advertising tower, a stand signboard, a side signboard, a transom signboard, or a rooftop signboard; a display component such as a showcase, a partition plate, or a store display; an illumination component such as a fluorescent lamp cover, a mood illumination cover, a lamp shade, a light ceiling, a light wall, or a chandelier; an interior component such as furniture, a pendant, or a mirror; building components such as doors, domes, safety glass panes, partitions, stair wafts, balcony wafts, and roofs of leisure buildings; transportation machine related components such as aircraft windshields, pilot visors, motorcycles, motorboat windshields, bus light shields, automobile side visors, rear visors, head wings, headlight covers, automobile interior members, and automobile exterior members such as bumpers; electronic equipment components such as sound-image nameplates, stereo covers, television protection masks, vending machines, mobile phones, and personal computers; medical equipment parts such as incubators and X-ray parts; equipment-related parts such as machine covers, instrument covers, experimental devices, rulers, dials, and observation windows; traffic-related parts such as road signs, guide plates, curved mirrors, and soundproofing walls; and other decorative and protective films, wallpapers and marking films for surfaces such as greenhouses, large water tanks, box water tanks, bathroom members, watch panels, bathtubs, sanitary articles, desk mats, game parts, toys, and face protective masks during welding.

Examples

Hereinafter, the present invention will be described in more detail with reference to Examples and Comparative Examples. The present invention is not limited by the following examples. In addition, the present invention includes all aspects obtained by arbitrarily combining items representing technical features such as the above-described characteristic values, forms, production methods, and applications. Measurements of physical property values in Examples and Comparative Examples were carried out by the following methods.

(Weight average molecular weight (Mw), number average molecular weight (Mn))

The weight average molecular weight (Mw) and the number average molecular weight (Mn) were determined by GPC (gel permeation chromatography) in terms of molecular weight calculated as standard polystyrene. In addition, the molecular weight distribution (Mw/Mn) was determined from the values of the weight average molecular weight (Mw) and the number average molecular weight (Mn). The measurement apparatus and conditions were as follows.

Apparatus: GPC apparatus "HLC-8320" manufactured by Tosoh Corporation

Separation column: "TSKgel SuperMultipore HZM-M" and "TSKgel SuperHZ4000" manufactured by Tosoh Corporation were directly connected to each other.

    Detector: "RI-8020" manufactured by Tosoh Corporation
    Eluent: tetrahydrofuran
    Eluent flow rate: 0.35 mL/min
    Sample concentration: 8 mg/10 mL
    Column temperature: 40°C

(Content of methyl methacrylate unit (%))

1 g of resin pellet was dissolved in 40 mL of dichloromethane. 25 μL of the resulting solution was collected on a platinum board. Dichloromethane was removed, and measurement was carried out by pyrolysis gas chromatography under the following conditions. The proportion of methyl methacrylate units was calculated based on the measurement results.

    Apparatus: GC-14A manufactured by Shimadzu Corporation
    Pyrolysis furnace temperature: 500°C
    Column: SGE BPX-5
    Temperature condition: holding at 40°C for 5 minutes → raising the temperature to 280°C at 5°C/min

(Melt flow rate: MFR)

In conformity with JIS K7210-1:2014, the melt flow rate was measured at 230°C under a load of 3.8 kg.

(Average particle diameter)

The average particle diameter was measured by diluting a latex containing sample particles 200 times with water and analyzing the diluted solution at 25°C using a laser diffraction scattering particle size distribution analyzer (manufactured by Horiba, Ltd., device name "LA-950V2"). At this time, the absolute refractive indices of the (meth)acrylic crosslinked rubber particles (B) and water were 1.4900 and 1.3333, respectively.

(Complex viscosity)

Using a hydraulic molding machine (manufactured by Toho Machinery Co., Ltd.), a sheet having a 1 mm thickness was produced from the (meth)acrylic resin composition at a setting temperature of 250°C. The storage modulus (G') and the loss modulus (G") of the obtained sheet were measured under the following conditions, and the complex viscosity in 10 rad/sec was calculated.

Measuring device: dynamic viscoelasticity measuring device ARES (manufactured by TA Instruments)

Measuring jig: both top and bottom parallel plates having a diameter of 8 mm, and the gap distance between the top and bottom is 1 mm.

Measurement conditions: 265°C, angular frequency ($\omega$) 0.1 to 100 rad/sec, 1% strain
Complex viscosity calculation method: $\eta^* = \{(G'(\omega))^2 + (G''(\omega))^2\}^{1/2}/\omega$
(In the formula, G' is a storage modulus, and G" is a loss modulus.)

(Initial differential pressure at front and back of polymer filter)

The resin pressures (Pi (MPa) and $P_2$ (MPa), respectively) at the inlet and outlet of a candle-type polymer filter having a filtration accuracy of 10 $\mu$m during film formation of the (meth)acrylic resin compositions produced in each of Examples and Comparative Examples were read from a monitor, and the initial differential pressure (MPa) was calculated from the following equation (1).

$$(\text{Initial differential pressure}) = P_1 - P_2 \qquad (1)$$

$P_1$ and $P_2$ are resin pressures when the molten resins of the (meth)acrylic resin compositions flow out from the T-die and the discharge becomes stable, and the values displayed on the monitor were observed for 30 seconds and the average value thereof was used.

(Film thickness)

The thicknesses of the films produced in Examples and Comparative Examples were measured with a micrometer at the central portion and at positions 100 mm from both end portions, and the average value thereof was defined as the film thickness.

(Tensile elongation at break)

A dumbbell-shaped test piece having a type 1B of JIS K 7127:1999 was cut out from the central portion in the width direction of the film produced in each of Examples and Comparative Examples so as to be parallel to the MD direction. Using this test piece, measurement was carried out three times under the condition of tensile speed of 20 mm/min in conformity with JIS K 7127:1999, and the average value thereof was taken as the tensile elongation at break.

[Production Example 1: Production of (Meth)acrylic Resin (A-1-1)]

To 89 parts by mass of methyl methacrylate and 11 parts by mass of methyl acrylate, 0.1 parts by mass of a polymerization initiator (2,2'-azobis(2-methylpropionitrile), hydrogen abstraction ability: 1%, one hour half-life temperature: 83°C) and 0.20 parts by mass of a chain transfer agent (n-octylmercaptan) were added and dissolved to obtain a raw material solution.

100 parts by mass of ion-exchanged water, 0.03 parts by mass of sodium sulfate, and 0.45 parts by mass of a suspension dispersant were mixed to obtain a mixed solution. 420 parts by mass of the mixed solution and 210 parts by mass of the raw material solution were charged into a pressure-resistant polymerization tank, and a polymerization reaction was initiated at a temperature of 70°C while stirring in a nitrogen atmosphere. After 3 hours from the start of the polymerization reaction, the temperature was raised to 90°C, and stirring was continued for 1 hour to obtain a liquid in which a bead copolymer was dispersed. Although some polymer adhered to the wall surface of the polymerization tank or the stirring blade, the polymerization reaction proceeded smoothly without foaming.

The obtained copolymer dispersion liquid was washed with an appropriate amount of ion-exchanged water, and the bead copolymer was taken out by a bucket-type centrifugal separator and dried for 12 hours by a hot air dryer at 80°C to obtain a bead-like (meth)acrylic resin (A-1-1).

The obtained (meth)acrylic resin (A-1-1) had a methyl methacrylate unit content of 89% by mass, a methyl acrylate unit content of 11% by mass, a weight average molecular weight (Mw) of 90000, a molecular weight distribution (Mw/Mn) of 2.1, and an MFR of 15.0 g/10 min.

[Production Example 2: Production of (Meth)acrylic Resin (A-1-2)]

A (meth)acrylic resin (A-1-2) was obtained in the same manner as in Production Example 1 except that the monomers used were changed to 95 parts by mass of methyl methacrylate and 5 parts by mass of methyl acrylate, and the amount of the chain transfer agent was changed to 0.27 parts by mass.

The obtained (meth)acrylic resin (A-1-2) had a methyl methacrylate unit content of 95% by mass, a methyl acrylate unit content of 5% by mass, a weight average molecular weight (Mw) of 73000, a molecular weight distribution (Mw/Mn) of 2.0, and an MFR of 10.2 g/10 min.

[Production Example 3: Production of (Meth)acrylic Resin (A-2)]

A (meth)acrylic resin (A-2) was obtained in the same manner as in Production Example 1 except that the monomers used were changed to 90 parts by mass of methyl methacrylate and 10 parts by mass of methyl acrylate, and the amount of the chain transfer agent was changed to 0.39 parts by mass.

The obtained (meth)acrylic resin (A-2) had a methyl methacrylate unit content of 90% by mass, a methyl acrylate unit content of 10% by mass, a weight average molecular weight (Mw) of 60000, a molecular weight distribution (Mw/Mn) of 2.1, and an MFR of 30.0 g/10 min.

[Production Example 4: Production of (Meth)acrylic Resin (A-3)]

A (meth)acrylic resin (A-3) was obtained in the same manner as in Production Example 1 except that the monomers used were changed to 99 parts by mass of methyl methacrylate and 1 part by mass of methyl acrylate, and the amount of the chain transfer agent was changed to 0.24 parts by mass.

The obtained (meth)acrylic resin (A-3) had a methyl methacrylate unit content of 99% by mass, a methyl acrylate unit content of 1% by mass, a weight average molecular weight (Mw) of 95000, a molecular weight distribution (Mw/Mn) of 2.0, and an MFR of 2.4 g/10 min.

[Production Example 5: Production of (Meth)acrylic Crosslinked Rubber Particles (B-1)]

(1) A reactor equipped with a stirrer, a thermometer, a nitrogen gas introduction tube, a monomer introduction tube, and a reflux condenser was charged with 1050 parts by mass of ion-exchanged water, 0.3 parts by mass of sodium polyoxyethylene tridecyl ether acetate, and 0.7 parts by mass of sodium carbonate, and the inside of the reactor was sufficiently replaced with nitrogen gas. The internal temperature was then brought to 80°C. Then, 0.25 parts by mass of potassium persulfate was added to the mixture and stirred for 5 minutes. To this, 245 parts by mass of a monomer mixture composed of 95.4% by mass of methyl methacrylate, 4.4% by mass of methyl acrylate, and 0.2% by mass of allyl methacrylate was continuously added dropwise over 60 minutes. After completion of the dropwise addition, the polymerization reaction was further carried out for 30 minutes so that the polymerization conversion was 98% or more.

(2) Next, 0.32 parts by mass of potassium persulfate was put into the same reactor and stirred for 5 minutes. Thereafter, 315 parts by mass of a monomer mixture composed of 80.5% by mass of butyl acrylate, 17.5% by mass of styrene, and 2% by mass of allyl methacrylate was continuously added dropwise over 60 minutes. After completion of the dropwise addition, the polymerization reaction was further carried out for 30 minutes so that the polymerization conversion was 98% or more.

(3) Next, 0.14 parts by mass of potassium persulfate was put into the same reactor and stirred for 5 minutes. Thereafter, 140 parts by mass of a monomer mixture composed of 95.2% by mass of methyl methacrylate, 4.4% by mass of methyl acrylate, and 0.4% by mass of n-octyl mercaptan was continuously added dropwise over 30 minutes. After completion of the dropwise addition, the polymerization reaction was further carried out for 60 minutes so that the polymerization conversion was 98% or more.

By the above operation, a latex containing (meth)acrylic crosslinked rubber particles (B-1) was obtained. The latex containing (meth)acrylic crosslinked rubber particles (B-1) was frozen and coagulated. Then, the mixture was washed with water and dried to obtain particulate (meth)acrylic crosslinked rubber particles (B-1). The average particle diameter of the particles was 0.23 $\mu$m.

As other materials, the following were used.

<Polymer Processing Aid (C)>

"Paraloid (registered trademark)" K125P manufactured by Dow Chemical Company.

< Ultraviolet Absorber (D)>

"Adekastab (registered trademark)" LA-31RG manufactured by Adeka Corporation.

<Antioxidant (E)>

"Irganox (registered trademark) 1010" manufactured by BASF Japan Ltd.

[Example 1]

36 parts by mass of the (meth)acrylic resin (A-1-1), 10 parts by mass of the (meth)acrylic resin (A-2), 34 parts by mass of the (meth)acrylic resin (A-3), 20 parts by mass of the (meth)acrylic crosslinked rubber particles (B-1), 1.5 parts by mass of the polymer processing aid (C), 2.3 parts by mass of the ultraviolet absorber (D), and 0.05 parts by mass of the antioxidant (E) were put into a hopper of a 41mm$\varphi$ twin-screw kneading extruder (TEM41-SS, manufactured by Toshiba Machine Co., Ltd.) while being controlled by a weight feeder. The temperature under the hopper was set to 150°C, and the barrel temperature was set to 230°C, respectively, and the (meth)acrylic resin composition was extruded into a strand shape and cut with a pelletizer to produce pellets of the (meth)acrylic resin composition.

The obtained pellets were extruded at a melt extrusion temperature (film-forming temperature including the temperature from the vent to the T-die) of 260°C and a discharge rate of 60 kg/h using an extruder having a vented 65 mm$\varphi$ single-screw extruder equipped with a gear pump and a candle-type polymer filter (filtration accuracy: 10 $\mu$m, filtration area: 0.4 m$^2$) in this order and a 900 mm wide T-die attached to the tip thereof, sandwiched between a metal mirror surface elastic roll at 92°C and a metal mirror surface rigid roll at 88°C to form a film, and taken off at 10.8 m/minute to form a film having a thickness of 60 $\mu$m. The evaluation results of the obtained (meth)acrylic resin composition and (meth)acrylic resin film are shown in Table 1.

[Examples 2 to 6]

(Meth)acrylic resin compositions and (meth)acrylic resin films were obtained in the same manner as in Example 1 except that the formulations shown in Table 1 were used. The evaluation results are shown in Table 1.

[Comparative Examples 1 and 2]

(Meth)acrylic resin compositions and (meth)acrylic resin films were obtained in the same manner as in Example 1 except that the formulations shown in Table 1 were used. The evaluation results are shown in Table 1. In Comparative Example 1 using a (meth)acrylic resin composition having a complex viscosity higher than 1300 Pa·s, there was a problem that the differential pressure was high, and in Comparative Example 2 using a (meth)acrylic resin composition having a complex viscosity lower than 500 Pa·s, there was a problem that the tensile elongation at break was low.

On the other hand, in Examples 1 to 6, the initial differential pressure at the front and back of the polymer filter was kept low, the (meth)acrylic resin composition used had a low viscosity, and the obtained film exhibited a high tensile elongation at break.

Table 1

| | | | Unit | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|---|---|
| (Meth) acrylic resin composition | (Meth)acrylic resin (A) | (Meth)acrylic resin (A-1-1) (MFR: 15.0 g/10 min) | Part by mass | 36 | 0 | 36 | 0 | 0 | 0 | 0 | 0 |
| | | (Meth)acrylic resin (A-1-2) (MFR: 10.2 g/10 min) | Part by mass | 0 | 42 | 0 | 42 | 70 | 42 | 0 | 42 |
| | | (Meth)acrylic resin (A-2) (MFR: 30.0 g/10 min) | Part by mass | 10 | 10 | 10 | 10 | 10 | 10 | 10 | 10 |
| | | (Meth)acrylic resin (A-3) (MFR: 2.4 g/10 min) | Part by mass | 34 | 28 | 37 | 31 | 0 | 28 | 70 | 41 |
| | (Meth)acrylic crosslinked rubber particles (B) | (Meth)acrylic Crosslinked Rubber Particles (B-1) | Part by mass | 20 | 20 | 17 | 17 | 20 | 20 | 20 | 7 |
| | Polymer processing aid (C) | Paraloid (registered trademark) K125P | Part by mass | 1.5 | 1.5 | 1.5 | 1.5 | 1.5 | 0 | 1.5 | 1.5 |
| | Ultraviolet absorber (D) | Adekastab (registered trademark) LA-31RG | Part by mass | 2.3 | 2.3 | 2.3 | 2.3 | 2.3 | 2.2 | 2.3 | 2.3 |
| | Antioxidant (E) | Irganox (registered trademark) 1010 | Part by mass | 0.05 | 0.05 | 0.05 | 0.05 | 0.05 | 0.05 | 0.05 | 0.05 |
| Complex viscosity | | | Pa·s | 842 | 1102 | 700 | 954 | 940 | 1081 | 1421 | 320 |
| Initial differential pressure at the front and back of the polymer filter | | | MPa | 3.4 | 4.4 | 2.6 | 3.6 | 3.8 | 4.3 | 5.8 | 1.2 |
| Film thickness | | | μm | 60 | 60 | 60 | 60 | 60 | 60 | 60 | 60 |
| Tensile elongation at break (MD direction) | | | % | 17.0 | 15.0 | 13.0 | 11.8 | 9.8 | 14.5 | 17.7 | 6.8 |

EP 3 889 190 A1

**Claims**

1. A (meth)acrylic resin composition, comprising a (meth)acrylic resin (A) and (meth)acrylic crosslinked rubber particles (B), wherein the (meth)acrylic resin composition has a complex viscosity of 500 to 1300 Pa·s under measurement conditions of 265°C, 10 rad/sec, and 1% strain.

2. The (meth)acrylic resin composition according to claim 1, wherein the content of the (meth)acrylic crosslinked rubber particles (B) in the (meth)acrylic resin composition is 5 to 40% by mass.

3. The (meth)acrylic resin composition according to claim 1 or 2, wherein the (meth)acrylic resin (A) contains 15 to 98 parts by mass of a (meth)acrylic resin (A-1) having a melt flow rate of more than 5 g/10 min and less than 20 g/10 min under conditions of a temperature of 230°C and a load of 3.8 kg, 2 to 15 parts by mass of a (meth)acrylic resin (A-2) having a melt flow rate of 20 g/10 min or more under conditions of a temperature of 230°C and a load of 3.8 kg, and 0 to 83 parts by mass of a (meth)acrylic resin (A-3) having a melt flow rate of 5 g/10 min or less under conditions of a temperature of 230°C and a load of 3.8 kg, with respect to 100 parts by mass of the (meth)acrylic resin (A).

4. The (meth)acrylic resin composition according to claim 3, wherein the (meth)acrylic resin (A-1) comprises 85 to 97% by mass of a structural unit derived from methyl methacrylate and has a weight average molecular weight of 66000 to 92000.

5. The (meth)acrylic resin composition according to claim 3 or 4, wherein the (meth)acrylic resin (A-2) comprises 80 to 97% by mass of a structural unit derived from methyl methacrylate and has a weight average molecular weight of 40000 to 65000.

6. The (meth)acrylic resin composition according to any one of claims 3 to 5, wherein the (meth)acrylic resin (A-3) comprises 95% by mass or more of a structural unit derived from methyl methacrylate and has a weight average molecular weight of 93000 to 150000.

7. The (meth)acrylic resin composition according to any one of claims 1 to 6, wherein the (meth)acrylic crosslinked rubber particles (B) contain 20 to 60% by mass of a structural unit derived from an alkyl acrylate ester.

8. A (meth)acrylic resin film comprising the (meth)acrylic resin composition according to any one of claims 1 to 7 and having a thickness of 20 to 500 μm.

9. The (meth)acrylic resin film according to claim 8, wherein a tensile elongation at break in the MD direction, as measured in conformity with JIS K 7127:1999, is 7% or more.

10. A decorative film comprising the (meth)acrylic resin film according to claim 8 or 9.

11. An optical film comprising the (meth)acrylic resin film according to claim 8 or 9.

12. The optical film according to claim 11, which is a polarizer protective film.

## INTERNATIONAL SEARCH REPORT

| | International application No. |
|---|---|
| | PCT/JP2019/046250 |

**A. CLASSIFICATION OF SUBJECT MATTER**
C08F 20/10(2006.01)i; C08F 265/06(2006.01)i; C08L 33/04(2006.01)i; C08L 51/00(2006.01)i; C08J 5/18(2006.01)i; G02B 5/30(2006.01)i
FI: C08L33/04; C08L51/00; C08F20/10; C08F265/06; C08J5/18 GEY; G02B5/30
According to International Patent Classification (IPC) or to both national classification and IPC

**B. FIELDS SEARCHED**

Minimum documentation searched (classification system followed by classification symbols)
C08F20/10; C08F265/06; C08L33/04; C08L51/00; C08J5/18; G02B5/30

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-93724 A (JIRO CORPORATE PLAN INC.) 17.05.2012 (2012-05-17) entire text all drawings | 1-12 |
| A | JP 2013-136775 A (LUCITE INTERNATIONAL UK LIMITED) 11.07.2013 (2013-07-11) entire text all drawings | 1-12 |
| A | JP 2014-84362 A (ASAHI KASEI CHEMICALS CORP.) 12.05.2014 (2014-05-12) entire text | 1-12 |
| A | JP 2014-173040 A (SUMITOMO CHEMICAL CO., LTD.) 22.09.2014 (2014-09-22) entire text | 1-12 |
| A | JP 2016-186081 A (KURARAY CO., LTD.) 27.10.2016 (2016-10-27) entire text | 1-12 |
| A | JP 2017-186471 A (KURARAY CO., LTD.) 12.10.2017 (2017-10-12) entire text all drawings | 1-12 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 February 2020 (14.02.2020) | 03 March 2020 (03.03.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**
Information on patent family members

International application No.

PCT/JP2019/046250

| Patent Documents referred in the Report | Publication Date | Patent Family | Publication Date |
|---|---|---|---|
| JP 2012-93724 A | 17 May 2012 | CN 102445717 A<br>KR 10-2012-0034000 A<br>TW 201219817 A | |
| JP 2013-136775 A | 11 Jul. 2013 | US 2008/0255295 A1<br>entire text all drawings<br>EP 1877486 A1<br>CA 2603957 A<br>KR 10-2008-0005579 A<br>CN 101166787 A | |
| JP 2014-84362 A | 12 May 2014 | (Family: none) | |
| JP 2014-173040 A | 22 Sep. 2014 | (Family: none) | |
| JP 2016-186081 A | 27 Oct. 2016 | US 2016/0053062 A1<br>entire text<br>EP 2985313 A1<br>TW 201446864 A<br>CN 105121543 A<br>KR 10-2015-0142683 A | |
| JP 2017-186471 A | 12 Oct. 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017204243 A
- JP 2010231015 A